# FASCICULE DE BREVET EUROPEEN

(11) **EP 2 511 178 B1**
(45) Date de publication et mention de la délivrance du brevet: **25.06.2014**
(21) Numéro de dépôt: 12163966.0
(22) Date de dépôt: 12.04.2012
(51) Int. Cl.: B64D 1/06, B64D 7/08, B64D 47/06

(54) **Dispositif de verrouillage libérable d'un engin volant destiné à être lancé à partir d'une plateforme**
Entsicherbare Verriegelungsvorrichtung eines Fluggeräts, das zum Abschuss von einer Plattform aus bestimmt ist
Releasable locking device of a flying vehicle intended for being launched from a platform

(30) Priorité: 13.04.2011 FR 1101128
(43) Date de publication de la demande: 17.10.2012
(73) Titulaire: Dassault Aviation, 75008 Paris (FR)
(72) Inventeur: Capetta, Thierry, 78470 Saint-Remy les Chevreuse (FR)
(74) Mandataire: Blot, Philippe Robert Emile

(56) Documents cités:
- US-A- 3 840 201
- US-A- 3 954 233
- US-A- 4 922 799

## Description

La présente invention concerne un dispositif de verrouillage libérable d'un engin volant selon le préambule de la revendication 1.

Un tel dispositif est destiné à être monté par exemple sur une plateforme telle qu'un aéronef, notamment un avion militaire.

L'engin volant est avantageusement un missile muni de moyens de propulsion propres à permettre son déplacement autonome à l'écart de la plateforme. En variante, l'engin volant est un drone ou un véhicule télécommandé.

Le dispositif de verrouillage est porté par l'aéronef, en particulier sous la voilure ou sous le fuselage de l'aéronef. II comporte un bâti fixé sous la voilure et un ensemble de verrouillage libérable, destiné à recevoir et à maintenir en position l'engin volant jusqu'à son lancement.

A cet effet, l'engin volant est généralement équipé d'au moins une ferrure qui fait saillie vers le haut à partir d'une surface supérieure de son carénage. Cette ferrure est reçue dans un guide présent sur le bâti pour assurer un guidage en translation de l'engin volant lors de son lancement à l'écart de l'aéronef.

Par ailleurs, la ferrure est retenue par une butée axiale libérable qui empêche le déplacement de l'engin volant lors du décollage, du vol et lors de l'atterrissage lorsque l'engin volant n'a pas été lancé par l'aéronef.

Généralement, les ferrures sont retenues par un crochet pivotant retenu par une détente escamotable.

Une fois l'ordre de tir envoyé, la détente est escamotée et le missile mis à feu pousse le crochet. La ferrure coulisse dans le guide de déplacement et l'engin volant est propulsé à l'écart de l'aéronef.

Généralement, la ferrure est de faible hauteur. Cependant, certains missiles de type « METEOR » ou « AMRAAM » présentent une ferrure munie d'une excroissance relativement haute. Dans ce cas, il est connu de placer l'excroissance entre deux crochets mobiles, comme cela est décrit dans US 4 922 799.

Un tel dispositif assure une retenue entre la ferrure et les crochets de la ferrure, notamment lorsqu'elle présente une taille importante.

Toutefois, ce dispositif ne donne pas entière satisfaction, notamment lorsque l'aéronef est conçu pour subir de forts efforts inertiels. En particulier, lorsque l'aéronef est destiné à apponter sur un navire, il subit des décélérations violentes, qui peuvent atteindre plusieurs g, en particulier lors de l'accrochage du filin de retenue présent sur le pont du navire. Dans ce cas, le jeu présent entre les crochets peut conduire à un déverrouillage intempestif du missile, voire à un déplacement non souhaité du missile par rapport à l'aéronef.

Par ailleurs, le jeu existant entre les crochets est susceptible de provoquer, en conditions normales de vol, un battage axial qui peut détériorer la ferrure et les crochets.

Un tel dispositif peut donc conduire à une usure mécanique prématurée de l'ensemble de verrouillage ou de l'organe de retenue de l'engin volant.

Un but de l'invention est de fournir un dispositif de verrouillage qui soit simple d'utilisation pour l'opérateur et qui soit très robuste, notamment lorsque l'engin volant subit des efforts inertiels importants.

Un autre but de l'invention est d'obtenir un dispositif de verrouillage qui assure une retenue ferme et fiable de l'engin volant lorsque celui-ci n'est pas lancé, en limitant le risque d'usure des pièces.

A cet effet, l'invention a pour objet un dispositif selon la revendication 1.

Le dispositif selon l'invention peut comprendre l'une ou plusieurs des caractéristiques des revendications 2 à 13 ou des caractéristiques suivantes, prise(s) isolément ou suivant toute combinaison techniquement possible :
- le premier organe de saisie et le deuxième organe de saisie sont montés rotatifs par rapport au bâti ;
- le deuxième organe de saisie est monté mobile, notamment en rotation, par rapport au bâti lors du passage entre la configuration fermée et la configuration ouverte ;
- le deuxième organe de saisie est monté mobile en rotation autour d'un deuxième axe de rotation, le premier organe de saisie et le premier axe de rotation étant déplaçables longitudinalement ou quasi-longitudinalement par rapport au bâti à l'encontre de la sollicitation engendrée par le mécanisme de sollicitation, entre une position de verrouillage et une position de libération de la rotation du premier organe de saisie ;
- le deuxième organe de saisie est monté fixe par rapport au bâti.

L'invention a également pour objet un ensemble de lancement selon la revendication 14.

L'ensemble de lancement peut comporter l'une au moins des caractéristiques suivantes :
- dans la configuration fermée, la distance séparant les points de contact entre l'organe de retenue et respectivement le premier organe de saisie et le deuxième organe de saisie lorsque l'organe de retenue est enserré entre lesdits organes de saisie, est supérieure à la distance séparant lesdits points en l'absence d'organe de retenue entre lesdits organes de saisie ;
- dans la configuration fermée, l'organe de sollicitation élastique est mis sous contrainte lorsque l'organe de retenue est enserré entre lesdits organes de saisie.

L'invention a également pour objet un procédé de lancement selon la revendication 15.

L'invention sera mieux comprise à la lecture de la description qui va suivre, donnée uniquement à titre d'exemple, et faite en se référant aux dessins annexés, sur lesquels :
- la Figure 1 est une vue schématique de côté d'une plateforme munie d'un premier dispositif de verrouillage selon l'invention ;
- la Figure 2 est une vue de côté, prise partiellement en coupe, du dispositif de la Figure 1, lors d'une première étape de chargement d'un engin volant dans le dispositif de la Figure 1 ;
- la Figure 3 est une vue analogue à la Figure 2 lors d'une deuxième étape de chargement de l'engin volant ;
- la Figure 4 est une vue analogue à la Figure 2, lors d'une première phase de lancement de l'engin volant ;
- la Figure 5 est une vue analogue à la Figure 4, lors d'une deuxième phase de lancement de l'engin volant ;
- la Figure 6 est une vue analogue à la Figure 5, lors d'une troisième phase de lancement de l'engin volant ;
- la Figure 7 est une vue partielle en perspective des pièces pertinentes du dispositif de la Figure 1 ;
- la Figure 8 est une vue schématique de côté d'un deuxième dispositif de largage selon l'invention lors de la mise en place ; et
- la Figure 9 est une vue analogue à la Figure 8, lors d'une phase de lancement.

Dans tout ce qui suit les termes « avant » et « arrière » s'entendent généralement par rapport au sens de déplacement de l'engin volant à l'écart de l'aéronef. Les autres orientations sont définies relativement aux Figures.

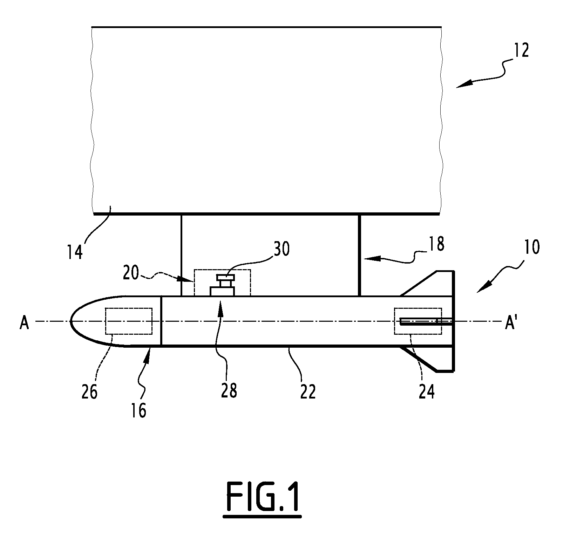

Un premier ensemble 10 de lancement selon l'invention est illustré sur la Figure 1. Cet ensemble 10 est monté sur une plateforme 12 représentée schématiquement sur la Figure 1.

La plateforme 12 est en particulier un aéronef comportant une aile 14.

L'ensemble de lancement 10 est par exemple monté sous l'aile 14. En variante, l'ensemble de lancement 10 est monté sous le fuselage de l'aéronef.

L'ensemble de lancement 10 comporte un engin volant 16, destiné à être lancé à partir de la plateforme 12, notamment lorsque la plateforme 12 est en mouvement, un support 18 fixé sur la plateforme 12, et un dispositif 20 de verrouillage libérable de l'engin volant 16 selon l'invention.

Le dispositif 20 est destiné à retenir l'engin volant 16 en position sur le support 18, avant le lancement de l'engin 16, lorsque la plateforme 12 se déplace. Il est aussi destiné à libérer et à guider l'engin volant 16 lorsque celui-ci se détache de la plateforme 12 en vue d'être lancé.

L'engin volant 16 est par exemple un missile, une fusée, un drone ou plus généralement un véhicule télécommandé.

L'engin volant 16 comporte ainsi un carénage 22, un moyen de propulsion 24 autonome, et, lorsque l'engin volant 16 est un missile, une charge explosive 26.

L'engin volant 16 comporte en outre un ensemble 28 de guidage et de retenue reçu dans le dispositif 20.

Les moyens de propulsion 24 sont aptes à entraîner l'engin volant 16 en mouvement, indépendamment du mouvement de la plateforme 12 et à diriger l'engin volant 16 vers une cible, comme par exemple un autre aéronef ou un point à la surface du sol.

De manière connue, l'ensemble de guidage et de retenue 28 comporte au moins un organe de guidage 30 généralement désigné par le terme « ferrure ». Avantageusement, l'ensemble 28 comporte une pluralité d'organes de guidage espacés longitudinalement sur la surface supérieure du carénage 22.

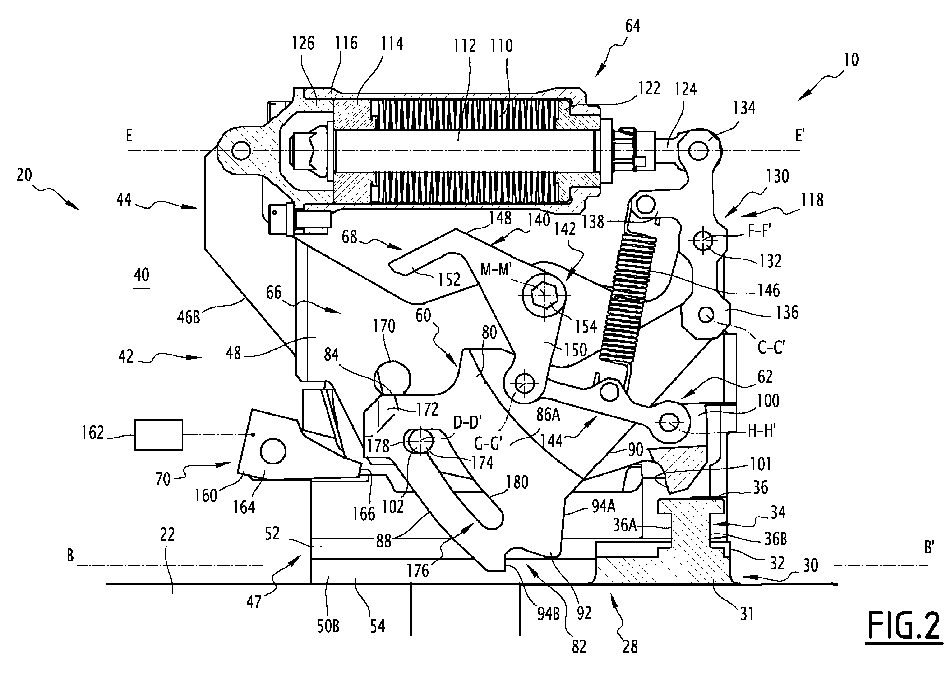

L'organe de retenue 30 illustré par la Figure 2 comporte un corps longitudinal 31 et deux bras de guidage latéraux 32 faisant saillie latéralement par rapport au corps 31. L'organe de retenue 30 comporte en outre une saillie additionnelle 34 de retenue.

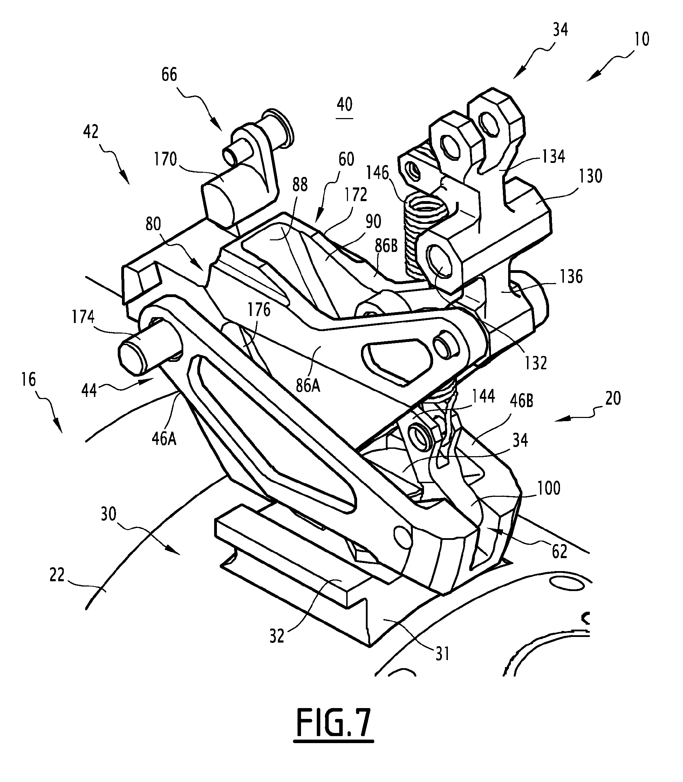

Le corps 31 et les bras 32 forment un coulisseau de section transversale en forme de T visible sur la Figure 7.

La saillie 34 dépasse verticalement au-dessus du corps 31 et au-dessus des bras 32. Elle présente une tête 36 définissant une cavité avant 36A et une cavité arrière 36B d'accrochage en contre-dépouille.

La hauteur de la saillie 34, prise entre une surface supérieure du corps 31 et la tête 36 est supérieure à la hauteur du corps 31.

Comme illustré par les Figures 2 à 7, le dispositif 20 comporte un bâti 40 et un ensemble 42 de verrouillage libérable de l'organe de retenue 30.

Le bâti 40 comporte un châssis 44 fixé sur le support 18. Comme illustré par la Figure 7, le châssis 44 présente deux flancs latéraux 46A, 46B délimitant entre eux une cavité de passage 48 recevant l'ensemble de verrouillage 42.

Le bâti 40 comporte en outre des rails 47 de guidage de l'engin volant 18.

Les rails 47 sont situés de part et d'autre de la cavité 48 sous les flancs 46A, 46B. Ils sont délimités vers le bas par des rebords inférieurs 50 respectifs, définissant chacun une fente 52 de coulissement d'un bras latéral 32 respectif.

La fente 52 s'étend longitudinalement parallèlement à l'axe A-A' suivant un axe B-B' représenté horizontal sur la Figure 2. Elle présente une hauteur sensiblement égale à la hauteur des bras 32.

Les rebords 50 sont situés de part et d'autre de la cavité 48. Ils font saillie l'un vers l'autre et délimitent entre eux une coulisse longitudinale de circulation de l'organe de retenue 30.

Ainsi, lorsque l'organe de retenue 30 est reçu dans le passage 54, et que les bras latéraux 32 sont reçus respectivement dans les fentes 52, le carénage 22 de l'engin volant 16 est guidé en translation le long de l'axe B-B' par la coopération entre l'organe de retenue 30 et les rails 47.

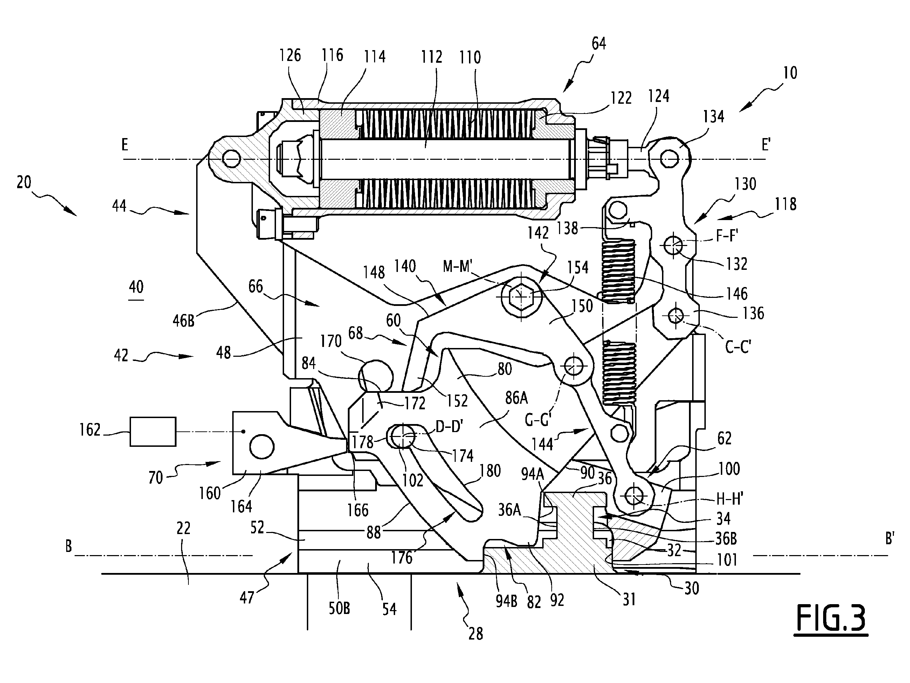

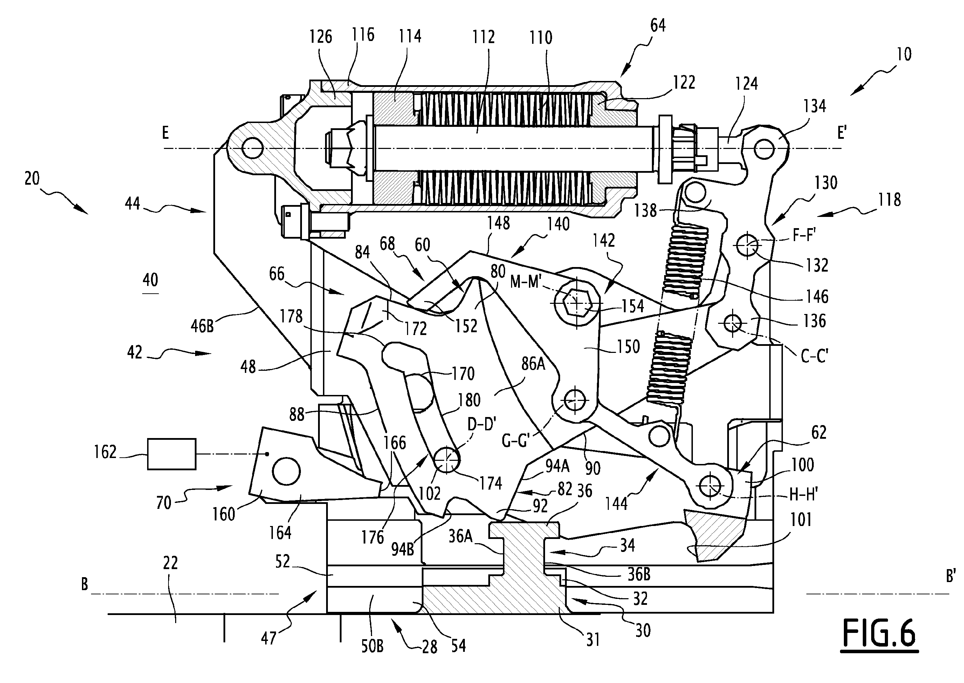

L'ensemble de verrouillage 42 comporte un premier organe avant 60 de saisie et un deuxième organe arrière 62 de saisie, montés mobiles par rapport au bâti 40 et l'un par rapport à l'autre, entre une configuration fermée de retenue de l'engin volant 16 dans le dispositif 20, visible sur les figures 3, 4 et 5 et une configuration ouverte de largage de l'engin volant 16 à l'écart du dispositif 20, visible sur la figure 6.

Selon l'invention, l'ensemble de verrouillage 42 comporte en outre un mécanisme 64 de sollicitation du premier organe de saisie 60 pour maintenir fermement le premier organe de saisie 60 et le deuxième organe de saisie 62 dans leur configuration fermée, et un ensemble 66 de guidage du déplacement du premier organe de saisie 60 lors du passage entre la configuration fermée et la configuration ouverte.

L'ensemble de verrouillage 42 comporte en outre un mécanisme 68 de mise en place manuelle des organes 60, 62 et un ensemble escamotable 70 de blocage en position empêchant le déplacement du premier organe de saisie 60 et le passage dans la configuration ouverte.

Le premier organe de saisie 60 forme un crochet avant 80 qui présente une surface arrière 82 de retenue de l'organe de retenue 30 vers l'avant et une surface supérieure 84 de coulissement sur l'ensemble de guidage 66.

Le crochet avant 80 est monté mobile en rotation autour d'un premier axe de rotation C-C'. Comme on le verra plus tard, l'axe C-C' est mobile quasi-longitudinalement par rapport au bâti 40 sur une première course de libération du crochet 80.

Par « quasi-longitudinalement », on entend que l'axe C-C' est mobile en translation ou en pseudo-translation le long d'un axe longitudinal perpendiculaire à l'axe C-C'. Par « pseudo-translation » on entend un déplacement le long d'un arc de cercle de grand rayon.

Dans cet exemple, comme illustré par la Figure 7, le crochet avant 80 comporte deux parois latérales 86A, 86B et une paroi avant 88 raccordant entre elles les parois latérales 86A, 86B.

Les parois latérales 86A, 86B présentent avantageusement une forme sensiblement triangulaire. Elles sont disposées sensiblement parallèles l'une à l'autre et délimitent entre elles un passage 90 de circulation du deuxième organe de saisie 62 (visible sur la Figure 7).

La paroi avant 88 raccorde les parois latérales 86A, 86B entre elles. Elle obture le passage 90 à l'avant. Elle présente une section verticale incurvée.

La paroi avant 88 délimite un gradin inférieur 92 définissant la surface arrière de retenue 82.

La surface arrière de retenue 82 présente ainsi avantageusement une première région arrière 94A destinée à coopérer avec la saillie additionnelle 34 lors de l'ouverture de l'ensemble et une deuxième région arrière 94B de retenue du corps 31 destinée à entrer en contact avec le corps 31.

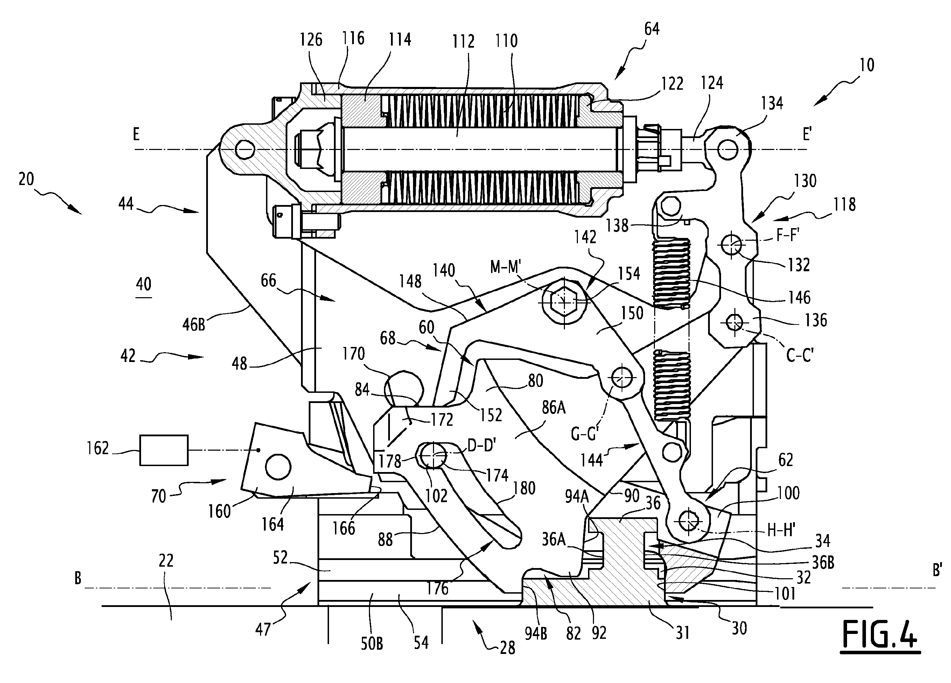

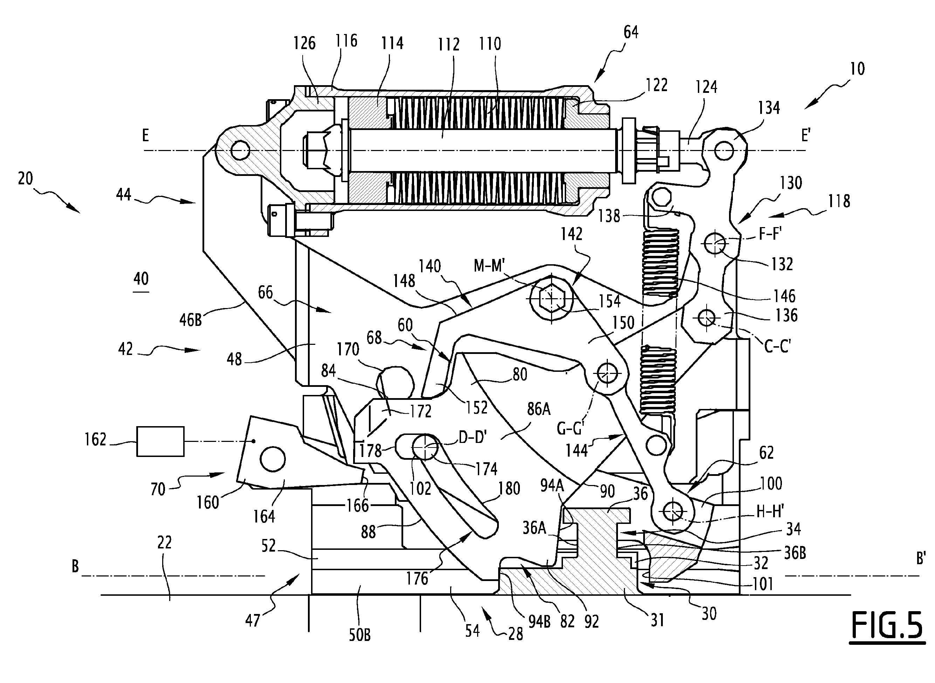

Comme on le décrira en détail plus bas, le crochet avant 80 et son premier axe C-C' sont déplaçables longitudinalement en translation ou en pseudo-translation le long d'un axe parallèle à l'axe B-B' sur une première course entre une position inférieure verrouillée, représentée sur les Figures 2 et 4, et une position de libération représentée sur la Figure 5.

Une fois dans la position de libération représentée sur la Figure 5, le crochet avant 80 est pivotable autour du premier axe C-C' vers une position escamotée haute, représentée sur la Figure 6.

Le deuxième organe de saisie 62 est formé par un crochet arrière 100 délimitant une surface avant 101 de retenue.

Dans cet exemple, le crochet arrière 100 est inséré dans le passage 90. II est articulé autour d'un pivot 102 définissant un deuxième axe de rotation D-D' fixe ou globalement invariant par rapport au bâti 40.

Le deuxième crochet 100 est ainsi pivotable entre une position de verrouillage arrière de l'organe de retenue 30, représentée sur la Figure 3 et une position escamotée d'insertion de l'engin volant 16 dans le dispositif 20, représentée sur la Figure 2.

Dans cet exemple, le mécanisme de sollicitation 64 est placé au-dessus du premier organe de saisie 60 et du deuxième organe de saisie 62.

II comporte un premier ressort 110, une tige d'actionnement 112 portant un piston 114 et une chemise de guidage 116. Le mécanisme 64 comporte en outre un ensemble de transmission 118.

Le ressort 110 est disposé dans la chemise 116. II est formé avantageusement par une pluralité de rondelles BELLEVILLE compressibles, au travers desquelles est insérée la tige 112. Le ressort 110 est interposé entre une butée mobile arrière 122 placée autour de la tige 112 à l'extrémité arrière de la chemise 116 et le piston 114.

Le piston 114 est monté coulissant autour de la tige 122 à l'extrémité avant de la tige 112. II est monté coulissant dans la chemise 116 le long d'un axe E-E'.

Le coulissement du piston 114 et de la butée mobile 122 limite les efforts engendrés lors du déplacement de la tige 112 dans un sens ou dans l'autre le long de l'axe E-E'.

La tige 112 s'étend à travers le ressort 110 dans la chemise 116. Elle présente une tête 124 qui fait saillie hors de la chemise 116 pour être raccordée sur l'ensemble de transmission 118. La tige 112 est déplaçable à coulissement dans la chemise 116 le long de l'axe E-E' qui, dans cet exemple, est parallèle à l'axe B-B'.

Le piston 114 est monté à l'extrémité avant de la tige 112. II est déplaçable conjointement en translation le long de l'axe E-E' avec la tige 112. II est interposé entre une butée avant fixe 126 délimitée par la chemise 116 et le ressort 110.

Dans une position de repos, le ressort 110 est maintenu en compression entre la butée arrière 122 et le piston 114.

Le piston 114 est maintenu appliqué contre la butée avant 126.

La tige 112 est alors rétractée dans la chemise 116 et la longueur de la tête 124 en saillie hors de la chemise 116 est minimale.

Sous l'effet du déplacement de l'ensemble de transmission 118, et comme on le verra plus bas, la tige 112 est déplaçable en translation le long de l'axe E-E' vers une position déployée, à l'encontre de la force de sollicitation du ressort 110.

Dans la position déployée, le piston 114 s'est rapproché de la butée arrière 122 et la longueur du ressort 110 a diminué.

Le piston 114 s'est éloigné de la butée avant 126, ouvrant un espace intermédiaire entre la butée avant 126 et le piston 114. La longueur de la tige 112 en saillie hors de la chemise 116 est alors maximale et la tête 124 est relativement plus éloignée de la chemise 116.

L'ensemble de transmission 118 comporte un levier 130 de transmission et un pivot 132 fixe d'articulation du levier 130 autour d'un axe de levier F-F' parallèle au premier axe C-C' et au deuxième axe D-D'.

Le levier 130 comporte un bras amont 134, articulé sur la tige 112, au niveau de la tête 124, un bras aval 136 articulé sur le premier organe de saisie 60 autour de son axe de rotation C-C' et, dans cet exemple, un bras auxiliaire 138 de liaison avec le mécanisme de mise en place 68.

Dans cet exemple, le bras amont 134 et le bras aval 136 sont sensiblement alignés. Le bras auxiliaire 138 fait saillie transversalement vers l'avant par rapport au bras amont 134, avantageusement à partir d'une partie médiane du bras amont 134.

Le levier 130 est pivotable autour de son axe F-F' entre une position arrière de maintien du premier organe de saisie 60 visible sur les Figures 2, 3 et 4 et une position avant de libération du premier organe de saisie 60, visible sur les Figures 5 et 6.

Dans la position de maintien illustrée par la figure 3, la tige d'actionnement 112 occupe sa position de repos. Le bras amont 134 est situé relativement plus proche de la chemise 116 vers l'avant. Le bras aval 136 est incliné vers l'arrière, de sorte que l'axe C-C' est relativement plus éloigné vers l'arrière de l'axe de levier F-F'.

Dans la position de libération illustrée sur la Figure 5, le levier 130 a pivoté autour de l'axe F-F' dans le sens des aiguilles d'une montre sur la figure. La tige 112 s'est déplacée vers sa position déployée, et le bras amont 134 a été entrainé vers l'arrière par rapport à l'axe F-F'. Le bras aval 136 et l'axe C-C' de rotation du premier organe de saisie 60 se sont déplacés vers l'avant, à l'avant de l'axe F-F'.

Le mécanisme de mise en place 68 comporte un levier d'actionnement 140, un pivot 142 de manoeuvre du levier 140, une bielle 144 de liaison au deuxième organe de saisie 62 et avantageusement, un ressort auxiliaire 146 de chargement.

Le levier d'actionnement 140 comporte un bras avant 148 d'appui sur le premier organe de saisie 60 et un bras arrière 150 de liaison avec la bielle 144.

Le bras avant 148 est coudé et présente un doigt d'appui 152 sur la surface supérieure 84. Le levier 140 présente ainsi généralement une forme de C s'ouvrant vers l'avant.

Le bras avant 148 n'est pas lié mécaniquement au premier organe de saisie 60.

Le pivot de manoeuvre 142 est articulé autour d'un axe d'actionnement M-M' perpendiculaire à l'axe B-B', et parallèle au premier axe C-C', au deuxième axe, D-D' et à l'axe de levier F-F'.

Le pivot 142 est monté rotatif par rapport au bâti 40 autour de l'axe M-M'. II est solidaire en rotation du levier de verrouillage 140.

Le pivot de manoeuvre 142 définit un moyen de coopération avec un outil de mise en place pouvant être actionné notamment à la main par l'utilisateur.

Dans cet exemple, le moyen de coopération est formé par une cavité 154 de forme polygonale destinée à recevoir une tête de clé.

La bielle de liaison 144 est articulée à l'avant autour d'un axe avant G-G' situé à l'extrémité libre du bras arrière 150, et est articulée à l'arrière autour d'un axe arrière H-H' sur une région arrière du deuxième organe de saisie 62.

Ainsi, le levier 140 et la bielle 144 sont montés librement rotatifs l'un par rapport à l'autre autour de l'axe G-G' entre une position inactive d'écartement des organes de saisie 60, 62 et une position de déplacement des organes de saisie 60, 62 l'un vers l'autre.

Dans la position inactive, représentée sur la Figure 2, le bras 148 a pivoté vers le haut autour de l'axe M-M'. Le doigt 152 est situé sensiblement au-dessus de l'axe avant G-G' d'articulation de la bielle 144. De même, l'axe H-H' est situé sensiblement à la même hauteur que l'axe G-G'.

En projection dans un plan vertical, l'axe avant G-G' d'articulation entre le levier 140 et la bielle 144 est alors situé à l'avant d'une droite passant par l'axe de rotation M-M' du levier et par l'axe arrière H-H'.

Le bras arrière 150 et la bielle 144 définissent ainsi un espace intermédiaire qui s'ouvre à l'opposé de l'espace intermédiaire défini entre le bras avant 148 et le bras arrière 150.

Dans la position de déplacement, représentée sur la Figure 3, le levier 140 a pivoté vers le bas autour de l'axe M-M', par exemple lorsqu'un opérateur du dispositif 20 a inséré un outil dans la cavité 154 et a entraîné le levier 140 en rotation dans le sens antihoraire.

Le doigt 152 est situé sensiblement à la même hauteur que l'axe avant G-G'.

De même, l'axe arrière H-H' s'est éloigné verticalement vers le bas de l'axe avant G-G'. L'axe avant G-G' a pivoté vers le haut et vers l'arrière.

L'espace intermédiaire délimité par le bras arrière 150 et la bielle 144 s'ouvre alors vers l'avant, dans le prolongement de l'espace intermédiaire défini entre le bras avant 148 et le bras arrière 150.

En projection dans un plan vertical, l'axe avant G-G' est situé à l'arrière d'une droite passant par l'axe M-M' de rotation et par l'axe arrière H-H' d'articulation de la bielle 144.

Le ressort auxiliaire 146 est monté en tension entre une partie médiane de la bielle 144 et le bras auxiliaire 138. Dans la position de libération, le deuxième organe de retenue 62 est maintenu relevé vers le haut par le ressort auxiliaire 146.

L'ensemble de blocage libérable 70 comporte une détente 160 escamotable entre une position active de blocage du premier organe de saisie 60 vers l'avant et une position escamotée de libération du premier organe de saisie 60.

La détente escamotable 160 est raccordée à un actionneur 162 propre à déplacer cette détente 160 entre la position de blocage et la position escamotée, sur réception d'un ordre de lancement de l'engin volant 12.

La détente escamotable 160 présente dans cet exemple une surface arrière 166 destinée à être placée en regard d'une surface avant de l'organe de saisie 60 dans la position de blocage.

L'ensemble de guidage 66 comporte un appui 170 solidaire du bâti, propre à coopérer avec une excroissance 172 solidaire du premier organe de saisie 60 en vue de bloquer en rotation le premier organe de saisie 60 sur la première course entre la position verrouillée et la position de libération.

L'ensemble de guidage 66 comporte en outre un organe de guidage 174 monté sur le bâti 40 et une rainure de guidage 176 ménagée dans le premier organe de saisie 60 pour recevoir l'organe de guidage 174.

L'appui 170 fait saillie parallèlement au premier axe C-C' et au deuxième axe D-D' dans la cavité 48 du bâti 40, sur une largeur inférieure à celle de la cavité 48.

L'excroissance 172 fait saillie latéralement à partir d'une surface latérale 86B du crochet 80 vers l'appui 170.

Les largeurs relatives de l'excroissance 172 et de l'appui 170 sont choisies pour que l'appui 170 coopère avec l'excroissance 172 afin d'empêcher le pivotement vers le haut du premier organe de saisie 60 autour de son axe C-C', entre la position de verrouillage et la position de libération.

Au contraire, une fois la position de libération atteinte, l'appui 170 est situé à l'arrière de l'excroissance 172 et le premier organe de saisie 60 est apte à pivoter autour de son axe C-C' vers le haut en passant au droit de l'appui 170.

Dans cet exemple, l'organe de guidage 174 est monté rotatif autour de son axe D-D'. Sa position est globalement invariante par rapport au bâti 40 lors de sa rotation.

L'organe de guidage 174 est par exemple formé par un rouleau rotatif. Dans cet exemple, l'axe de rotation de l'organe de guidage 174 est confondu avec le deuxième axe D-D' de rotation du deuxième organe de saisie 62.

La rainure de guidage 176 comprend une région avant 178 sensiblement droite, et une région arrière 180 sensiblement incurvée.

La région avant 178 est d'axe parallèle à l'axe de translation du premier organe de saisie 60 sur sa première course. Sa longueur est sensiblement égale à la course du premier organe de saisie 60 entre la position de verrouillage et la position de libération.

Grâce à la disposition adéquate de l'ensemble de sollicitation 64, cette course est courte.

La région arrière 180 est incurvée vers le bas par rapport à la région avant 178. Dans cet exemple, la région arrière 180 présente une forme d'arc de cercle centré sur l'axe C-C'. En variante, la région arrière 180 présente une forme droite.

Le fonctionnement de l'ensemble de lancement 10 selon l'invention va maintenant être décrit.

Initialement, comme illustré par la Figure 2, l'engin volant 16 est chargé dans le dispositif 20.

A cet effet, le mécanisme de verrouillage 68 occupe sa position inactive. Le levier de verrouillage 140 est relevé, de sorte que le doigt 152 est relativement éloigné du rail 47.

Le bras arrière 150 est disposé vers le bas, de sorte que l'axe G-G' est situé à l'avant de la droite passant par l'axe de rotation M-M' du levier et par l'axe arrière d'articulation H-H' en projection dans un plan vertical.

L'axe arrière H-H' étant situé au voisinage de l'axe de rotation G-G', le crochet arrière 100 est aussi relevé au-dessus des rails 47, dégageant un espace libre d'insertion de l'organe de retenue 30 dans les rails 47. En particulier, la deuxième région 94B est au contact du corps 31.

Dans cette position, sous l'effet de la sollicitation du ressort 110, le piston 114 est placé au contact de la butée avant 126. La tige 112 occupe sa position rétractée, et le levier de transmission 130 occupe sa position arrière.

L'axe C-C' de rotation du premier organe de saisie 60 est situé à l'arrière de l'axe F-F' de rotation du levier 130.

Le crochet avant 80 est placé dans une position inférieure verrouillée, dans laquelle la surface arrière 82 est interposée sur la trajectoire de l'organe de retenue 30 le long du rail 47.

Dans cette position, l'organe de guidage 174 est reçu dans la région avant 118 de la rainure 176. L'excroissance 172 est calée sous l'appui 170, ce qui empêche le déplacement en rotation vers le haut du crochet avant 80.

Lors du déplacement vers l'avant de l'engin volant 16, les bras latéraux 32 de l'organe de retenue 30 coulissent dans les rails 52 en prenant appui sur les rebords 50. La saillie 34 passe sous le crochet arrière 100 sans entrer en contact avec lui.

L'engin volant 16 est déplacé le long de l'axe B-B' vers l'avant jusqu'à ce qu'il bute contre le premier organe de saisie 60. La première région arrière 94A se place en regard de la saillie 34 au dessus et à l'écart du corps 31. La deuxième région de retenue 94B se place au contact du corps 31.

La surface arrière 82 bloque ainsi le déplacement vers l'avant de l'organe de retenue 30.

Ceci étant fait, l'opérateur pivote le levier de mise en place 140 pour le faire passer dans la position de déplacement. A cet effet, il introduit un outil dans la cavité 154 et actionne manuellement le levier 140 en rotation dans le sens inverse des aiguilles d'une montre.

Lors de ce pivotement, le bras avant 148 se déplace vers le bas jusqu'à ce que le doigt 152 entre en contact avec la surface supérieure 84 du premier organe de saisie 60.

De même, l'axe G-G' situé sur le bras arrière 150 se déplace vers le haut et vers l'arrière. La bielle 144 et l'axe arrière H-H' basculent conjointement avec le crochet arrière 100 qui pivote autour de l'axe de rotation D-D' jusqu'à sa position verrouillée.

Dans cette position, représentée sur la Figure 3, l'axe G-G' d'articulation entre le levier 140 et la bielle 144 est situé à l'arrière du plan défini par le plan d'axe M-M' de rotation du levier 140 et l'axe arrière H-H'. La surface avant 101 du crochet arrière 100 est appliquée fermement contre l'organe de retenue 30 pour bloquer le déplacement de l'organe de retenue 30 vers l'arrière.

Sous l'effet de la force de sollicitation du ressort 110, le premier axe C-C' est sollicité vers l'arrière, de sorte que la surface arrière 82 du premier organe de saisie 60 est appliquée fermement sur l'organe de retenue 30 en exerçant une force de sollicitation vers l'arrière sur l'organe de retenue 30.

L'organe de retenue 30 est ainsi enserré entre le premier organe de saisie 60 et le deuxième organe de saisie 62 sans jeu intermédiaire. II est maintenu dans cette configuration par l'ensemble de sollicitation 64 qui engendre une force de retenue et de sollicitation du premier organe de saisie 60 vers le deuxième organe de saisie 62.

L'organe de retenue 30 est donc calé, ce qui empêche son déplacement relatif par rapport aux organes de saisie 60, 62. Aucun jeu n'existant pour ce déplacement, le risque d'usure des organes de saisie 60 ou de l'organe 62, 60 ou de l'organe de retenue 30 est donc très limité.

Dans la configuration fermée des organes de saisie 62, la distance séparant les points de contact entre l'organe de retenue 30 et respectivement la surface arrière 82 et la surface avant 101 (qui correspond à la longueur de l'organe 30) lorsque l'organe de retenue 30 est calé entre les organes de saisie 60, 62 est légèrement supérieure à la distance séparant ces points en l'absence d'organe de retenue 30. Ceci induit une mise sous contrainte du ressort 110, ce ressort ayant été lui-même initialement réglé avec une pré-charge.

Dans cette configuration, la détente escamotable 160 est placée dans sa configuration de retenue. Toutefois, il existe un faible jeu entre la surface arrière 166 de la détente 160 et la surface avant de l'organe 60, ce qui évite les chocs éventuels entre la détente escamotable 160 et l'organe de saisie avant 60.

En cas de déclenchement intempestif des moyens de propulsion 24, l'engin volant 16 applique une force de déplacement vers l'avant sur l'organe de saisie avant 60 par l'intermédiaire de l'organe de retenue 30.

Dans ce cas, le premier axe C-C' se déplace légèrement vers l'avant à l'encontre de la force de sollicitation du ressort 110 transmise par l'ensemble 116, jusqu'à ce que l'organe de saisie 60 entre en contact avec la détente 160. Ce déplacement est plus court que la course en translation de l'organe de saisie 60 entre sa position de verrouillage et sa position de libération.

Par suite, l'appui 170 reste au contact de l'excroissance 172 et la butée de guidage 174 reste dans la région amont 178 de la rainure 176. Ceci empêche le basculement vers le haut du premier organe de saisie 60 et maintient l'organe de retenue 60 en place. L'engin volant 16 est alors maintenu solidaire de la plateforme 12.

En fonctionnement normal, lorsque l'engin volant 16 doit être lancé, la détente escamotable 160 est passée dans sa position escamotée, comme représenté sur la Figure 4. Puis, les moyens de propulsion 24 sont activés, ce qui engendre une force de déplacement de l'engin volant 16 par rapport à la plateforme 12 le long de l'axe B-B'.

L'activation des moyens de propulsion 24 n'est possible qu'après l'escamotage de la détente 160.

Le premier organe de retenue 60 n'étant plus retenu par la détente 160, il est libre de se déplacer vers l'avant.

Pour permettre ce déplacement vers l'avant, la force engendrée par l'engin volant 16 par l'intermédiaire de l'organe de retenue 30 doit être suffisante pour surmonter la force de sollicitation engendrée par le ressort 110 et transmise par l'ensemble de transmission 118.

Par suite, la présence de l'ensemble de sollicitation 64 garantit que l'engin volant 16 n'est lancé qu'après un allumage suffisant des moyens de propulsion 24.

Lorsque la force engendrée par l'engin volant 16 surmonte la force de sollicitation du ressort 110, l'organe de retenue 30 pousse le premier organe de saisie 60 vers l'avant.

Ceci provoque le déplacement vers l'avant du premier axe de rotation C-C' et le pivotement du levier de transmission 130 autour de l'axe F-F'.

Le bras amont 134 pivote alors vers l'arrière, entraînant le déploiement de la tête 124 et de la tige 112 hors de la chemise 116 par compression du ressort 110 entre la butée 122 arrière et le piston 114.

Le piston 114 s'éloigne donc progressivement de la butée avant 126, ce qui provoque la compression longitudinale du ressort 110 le long de l'axe E-E'.

Lors de ce déplacement, l'excroissance 172 coulisse sous l'appui 170 et se décale longitudinalement par rapport à celui-ci. Simultanément, la butée de guidage 174 se déplace dans la rainure de guidage 176 dans la région avant 178 pour atteindre la région arrière 180.

En référence à la Figure 5, lorsque le premier organe de saisie 60 atteint sa position de libération, l'appui 170 est décalé axialement le long de l'axe B-B' par rapport à l'excroissance 172. La butée de guidage 174 est située à l'intersection entre la région avant 178 et la région arrière 180.

Le premier organe de saisie 60 est alors libre de pivoter vers le haut. Sous l'effet du déplacement de l'organe de retenue 30 vers l'avant, l'organe de retenue 30 soulève le crochet avant 80 pour laisser passer la saillie additionnelle 34. Lors de ce déplacement, la paroi latérale 86B du crochet passe au droit de l'appui 170. La butée de guidage 174 coulisse dans la rainure 176, jusqu'à l'extrémité arrière de la région arrière incurvée 180.

Le crochet 80 pivote alors autour du premier axe C-C'. Le soulèvement du crochet 80 provoque en outre, par coopération avec le doigt 152, le basculement du bras avant 148 du levier 140 vers le haut et son pivotement autour de l'axe M-M' dans le sens des aiguilles d'une montre.

Ce pivotement provoque le déplacement vers le bas de l'axe avant G-G' d'articulation de la bielle 144 et le pivotement vers le haut du crochet arrière 100.

Comme représenté sur la Figure 6, le premier organe de saisie 60 est alors situé au-dessus du rail 47 et au-dessus de l'organe de retenue 30. Le déplacement de l'organe de retenue 30 le long de l'axe B-B' vers l'avant est donc libre. L'engin volant 16 est lancé à l'écart de la plateforme 12.

La course nécessaire au passage du premier organe de saisie 60 de sa position de verrouillage à sa position de libération est très courte, ce qui limite la taille du ressort 110 et la course nécessaire à l'actionnement de ce ressort 110, tout en assurant une retenue très efficace de l'organe de retenue 30 entre les organes de saisie 60, 62 avant le lancement.

L'obtention d'une course de faible longueur est rendue possible par le déplacement en rotation du premier organe de sollicitation 60 lorsque sa position de libération est atteinte.

Une fois l'engin volant 16 lancé, et la plateforme 12 disponible pour l'opérateur, l'opérateur bascule le mécanisme de mise en place 68, en actionnant le levier de verrouillage 140 en rotation dans un premier sens à l'aide d'un outil, comme décrit précédemment.

Le levier d'actionnement 140 pivote autour de son axe M-M' et ramène ainsi les organes de saisie 60, 62 dans leur configuration fermée, par poussée du doigt 152 sur la surface supérieure 84.

Puis, l'opérateur rebascule le levier 140 dans un deuxième sens opposé au premier sens pour remonter le deuxième organe de saisie 62 au dessus des rails de guidage 47. Le premier organe de saisie 60 reste immobile dans sa position inférieure verrouillée décrite sur la Figure 1.

Comme décrit plus haut, un autre engin volant 16 peut alors être introduit dans les rails 47.

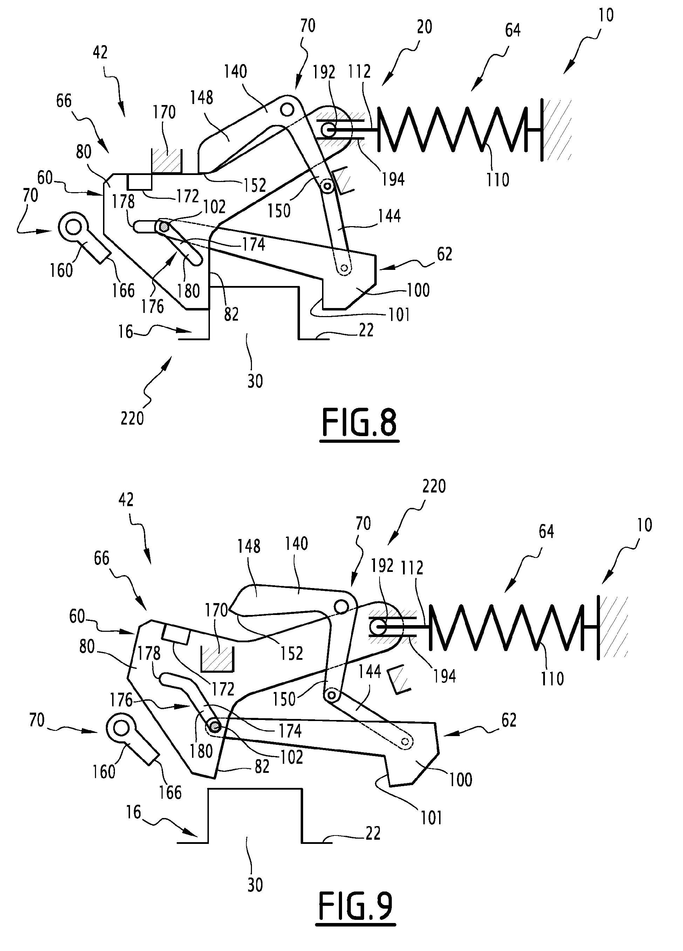

Un deuxième dispositif 220 selon l'invention est illustré par les Figures 8 et 9. A la différence du premier dispositif 20, la tige d'actionnement 112 du ressort 110 est articulée directement sur le premier organe de saisie 60, sans interposition d'un levier 130.

Le ressort 110 s'étend alors parallèlement à l'axe B-B', mais à l'arrière de l'organe de saisie 60, et non au-dessus de cet organe 60.

L'ensemble de transmission entre la tige 112 et le premier organe de saisie 60 est formé par un simple pivot 192 reçu dans un guide 194. Le guide 194 est propre à maintenir le déplacement en translation de la tige 192 le long d'un axe parallèle à l'axe B-B', sur la course du premier organe de saisie 60 entre la position de verrouillage et la position de libération.

Le deuxième dispositif 220 fonctionne par ailleurs de manière analogue au premier dispositif 20.

Dans une variante (non représentée), le deuxième organe de saisie 62 est monté fixe sur le bâti 40.

## Revendications

1. Dispositif (20 ; 220) de verrouillage libérable d'un engin volant (16) destiné à être lancé à partir d'une plateforme (12), du type comprenant :
- un bâti (40) destiné à être fixé sur la plateforme (12), le bâti (40) comportant un guide de lancement de l'engin volant (16) à partir d'une position initiale verrouillée sur le bâti (40) ;
- un ensemble (42) de verrouillage libérable de l'engin volant (16) dans la position verrouillée, l'ensemble de verrouillage (42) comprenant un premier organe de saisie (60) et un deuxième organe de saisie (62), au moins un organe de saisie (60, 62) étant monté mobile par rapport au bâti (40) pour faire passer les organes de saisie (60, 62) entre une configuration fermée de saisie d'un organe de retenue (30) de l'engin volant (16) et une configuration ouverte de libération de l'engin volant (16) ;
**caractérisé en ce que** l'ensemble de verrouillage (42) comporte un mécanisme (64) de sollicitation élastique des organes de saisie (60, 62) propre à solliciter le premier organe de saisie (60) vers le deuxième organe de saisie (62) dans la configuration fermée pour enserrer l'organe de retenue (30) entre le premier organe de saisie (60) et le deuxième organe de saisie (62).

2. Dispositif (20 ; 220) selon la revendication 1, **caractérisé en ce que** le premier organe de saisie (60) est monté rotatif autour d'un premier axe (C-C') de rotation , le premier organe de saisie (60) et le premier axe de rotation (C-C') étant déplaçables longitudinalement ou quasi-longitudinalement par rapport au bâti (40) à l'encontre de la sollicitation engendrée par le mécanisme de sollicitation (64), entre une position de verrouillage et une position de libération de la rotation du premier organe de saisie (60).

3. Dispositif (20 ; 220) selon la revendication 2, **caractérisé en ce que** le premier organe de saisie (60) est pivotable autour du premier axe de rotation (C-C') à partir de la position de libération.

4. Dispositif (20 ; 220) selon l'une des revendications 2 ou 3, **caractérisé en ce que** le bâti (40) comporte une détente (160) de blocage des organes de saisie (60, 62) dans leur configuration fermée, la détente de blocage (160) étant escamotable depuis une position active de blocage dans laquelle la détente de blocage (160) est propre à empêcher les organes de saisie (60, 62) à passer dans leur configuration ouverte et une position escamotée dans laquelle les organes de saisie (60, 62) sont aptes à passer dans leur configuration ouverte.

5. Dispositif (20 ; 220) selon l'une quelconque des revendications 2 à 4, **caractérisé en ce que** le bâti comporte un appui (170) propre à empêcher le déplacement en rotation du premier organe de saisie (60) entre la position initiale et la position de libération de la rotation, une excroissance (172) solidaire du premier organe de saisie (60) étant au contact de l'appui (170) jusqu'à la position de libération de la rotation.

6. Dispositif (20 ; 220) selon l'une quelconque des revendications précédentes, **caractérisé en ce que** le bâti (40) comporte un organe (174) de guidage du déplacement du premier organe de saisie (60), le premier organe de saisie (60) délimitant une rainure (176) recevant à coulissement l'organe de guidage (174), la rainure (176) comprenant avantageusement une première région (178) sensiblement droite et une deuxième région (180) incurvée par rapport à la première région (178).

7. Dispositif (20 ; 220) selon l'une quelconque des revendications précédentes, **caractérisé en ce que** le mécanisme de sollicitation (64) comporte une tige (112) d'actionnement destinée à actionner le premier organe de saisie (60) et un organe (110) de sollicitation élastique de la tige d'actionnement (112), la tige d'actionnement (112) étant déplaçable entre une position de repos, dans laquelle les organes de saisie (60, 62) occupent leur configuration fermée, et une position déployée, dans laquelle les organes de saisie (60, 62) occupent leur configuration ouverte et dans laquelle la tige (112) est sollicitée élastiquement par l'organe de sollicitation élastique (110) vers la position de repos.

8. Dispositif (20) selon la revendication 7, **caractérisé en ce que** le mécanisme de sollicitation (64) comporte un levier (130) de transmission monté pivotant autour d'un axe de levier (F-F'), le levier (130) comportant un premier bras (134) articulé sur la tige d'actionnement (112) et un deuxième bras (136) raccordé au premier organe de saisie (60).

9. Dispositif (20) selon l'une quelconque des revendications 7 à 8, **caractérisé en ce que** l'organe de sollicitation élastique (110) est propre à être comprimé lors du passage des organes de saisie (60, 62) entre la configuration fermée et la configuration ouverte.

10. Dispositif (20 ; 220) selon l'une quelconque des revendications précédentes, **caractérisé en ce qu'**il comporte un mécanisme intermédiaire (68) de mise en place du premier organe de saisie (60) et du deuxième organe de saisie (62), le mécanisme intermédiaire (68) étant propre à être actionné, en particulier par un opérateur, pour déplacer au moins le premier organe de saisie (60) lors du passage des organes de saisie (60, 62) de la configuration ouverte à la configuration fermée.

11. Dispositif selon la revendication 10, **caractérisé en ce que** le mécanisme de mise en place (68) est propre à actionner conjointement le deuxième organe de saisie (62) avec le premier organe de saisie (60) lors du passage des organes de saisie (60, 62) depuis la configuration ouverte vers la configuration fermée.

12. Dispositif (20 ; 220) selon l'une quelconque des revendications 9 à 11, **caractérisé en ce que** le mécanisme de mise en place (68) comporte un levier d'actionnement (140) monté rotatif autour d'un axe d'actionnement (M-M'), le levier d'actionnement (140) comprenant un bras avant (140) destiné à s'appliquer sur le premier organe de saisie (60) et un bras arrière (150), le mécanisme de déplacement (68) comportant une bielle (144) raccordant le bras arrière (150) au deuxième organe de saisie (62).

13. Dispositif (20 ; 220) selon la revendication 12, **caractérisé en ce que** le mécanisme de mise en place (68) comporte un ressort auxiliaire (146) de rappel, une extrémité du ressort auxiliaire de rappel (146) étant fixée sur l'un parmi la bielle (144) et le levier de déplacement (140).

14. Ensemble de lancement (10) **caractérisé en ce qu'**il comporte :
- un dispositif (20 ; 220) selon l'une quelconque des revendications précédentes ;
- un engin volant (16) porté par le dispositif (20 ; 220), l'engin volant (16) comportant un organe de retenue (30), l'organe de retenue (30) étant enserré entre le premier organe de saisie (60) et le deuxième organe de saisie (62) dans la configuration fermée.

15. Procédé de lancement d'un engin volant (16) à partir d'une plateforme (12), du type comportant les étapes :
- fourniture d'un ensemble de lancement (10) selon la revendication 14, l'organe de retenue (30) de l'engin volant (16) étant maintenu enserré entre le premier organe de saisie (60) et le deuxième organe de saisie (62);
- activation de moyens de propulsion (24) de l'engin volant (16) ;
- application d'une force de déplacement du premier organe de saisie (60) par l'organe de retenue (30) sous l'effet de la force de propulsion de l'engin volant (16), à l'encontre d'une force d'enserrement engendrée par le mécanisme de sollicitation (64) ;
- déplacement d'au moins un organe de saisie (60, 62) pour faire passer les organes de saisie (60, 62) de la configuration fermée à la configuration ouverte ;
- lancement de l'engin volant (16) à l'écart de la plateforme (12) par déplacement sur le guide.

## Patentansprüche

1. Vorrichtung (20; 220) zum lösbaren Verriegeln eines Fluggeräts (16), welches dazu bestimmt ist, um von einer Plattform (12) aus abgeworfen zu werden, des Typs aufweisend:
- einen Tragrahmen (40), der dazu bestimmt ist, an der Plattform (12) befestigt zu sein, wobei der Tragrahmen (40) aufweist eine Führung zum Abwerfen des Fluggeräts (16) ausgehend von einer anfänglichen Verrieglungsposition an dem Tragrahmen (40),
- eine Einheit (42) zum lösbaren Verriegeln des Fluggeräts (16) in der Verriegelungsposition, wobei die Einheit zum Verriegeln (42) aufweist ein erstes Eingriffsorgan (60) und ein zweites Eingriffsorgan (62), wobei wenigstens ein Eingriffsorgan (60, 62) bezüglich des Tragrahmens (40) bewegbar montiert ist, um die Eingriffsorgane (60, 62) zwischen einer Schließkonfiguration des Fassens eines Halteorgans (30) des Fluggeräts (16) und einer Öffnungsposition des Freigebens des Fluggeräts (16) passieren zu lassen,
**dadurch gekennzeichnet, dass** die Einheit zum Verriegeln (42) aufweist einen Mechanismus (64) zum elastischen Vorspannen der Eingriffsorgane (60, 62), der in der Lage ist, in der Schließkonfiguration das erste Eingriffsorgan (60) gegen das zweite Eingriffsorgan (62) vorzuspannen zum Einspannen des Halteorgans (30) zwischen dem ersten Eingriffsorgan (60) und dem zweiten Eingriffsorgan (62).

2. Vorrichtung (20; 220) gemäß Anspruch 1, **dadurch gekennzeichnet, dass** das erste Eingriffsorgan (60) um eine erste Rotationsachse (C-C') rotierbar montiert ist, wobei das erste Eingriffsorgan (60) und die erste Rotationsachse (C-C') entgegen der Vorspannung, die von dem Mechanismus zum Vorspannen (64) bewirkt wird, bezüglich des Tragrahmens (40) längs oder quasi-längs verlagerbar sind zwischen einer Position der Verriegelung und einer Position der Freigabe der Rotation des ersten Eingriffsorgans (60).

3. Vorrichtung (20; 220) gemäß Anspruch 2, **dadurch gekennzeichnet, dass** das erste Eingriffsorgan (60) um die erste Rotationsachse (C-C') ausgehend von der Freigabeposition schwenkbar ist.

4. Vorrichtung (20; 220) gemäß einem der Ansprüche 2 oder 3, **dadurch gekennzeichnet, dass** der Tragrahmen (40) aufweist einen Abzug (160) zum Blockieren der Eingriffsorgane (60, 62) in ihrer Schließkonfiguration, wobei der Abzug zum Blockieren (160) zwischen einer Aktiv-Blockier-Position, in welcher der Abzug zum Blockieren (160) in der Lage ist, die Eingriffsorgane (60, 62) daran zu hindern, in ihre Öffnungskonfiguration zu passieren, und einer Ausrückposition ausrückbar ist, in welcher die Eingriffsorgane (60, 62) in der Lage sind, in ihre Öffnungsposition zu passieren.

5. Vorrichtung (20; 220) gemäß irgendeinem der Ansprüche 2 bis 4, **dadurch gekennzeichnet, dass** der Tragrahmen aufweist eine Auflage (170), die in der Lage ist, die Rotationsverlagerung des ersten Eingriffsorgans (60) zwischen der anfänglichen Position und der Position der Freigabe der Rotation zu verhindern, wobei ein Vorsprung (172), der mit dem ersten Eingriffsorgan (60) fest verbunden ist, bis zur Position der Freigabe der Rotation im Kontakt mit der Auflage (170) ist.

6. Vorrichtung (20; 220) gemäß irgendeinem der vorhergehenden Ansprüche, **dadurch gekennzeichnet, dass** der Tragrahmen (40) aufweist ein Organ (174) zum Führen der Verlagerung des ersten Eingriffsorgans (60), wobei das erste Eingriffsorgan (60) eine Nut (176) begrenzt, die das Organ zum Führen (174) aufnimmt, um geführt verschiebbar zu sein, wobei die Nut (176) vorteilhaft aufweist einen ersten Bereich (178), der im Wesentlichen gerade ist, und einen zweiten Bereich (180), der bezüglich des ersten Bereichs (178) gekrümmt ist.

7. Vorrichtung (20; 220) gemäß irgendeinem der vorhergehenden Ansprüche, **dadurch gekennzeichnet, dass** der Vorspannmechanismus (64) aufweist eine Betätigungsstange (112), die dazu bestimmt ist, das erste Eingriffsorgan (60) zu betätigen, und ein Organ (110) zum elastischen Vorspannen der Betätigungsstange (112), wobei die Betätigungsstange (112) verlagerbar ist zwischen einer Einzugsposition, in welcher die Eingriffsorgane (60, 62) ihre Schließkonfiguration einnehmen, und eine Ausfahrposition, in welcher die Eingriffsorgane (60, 62) ihre Öffnungskonfiguration einnehmen und in welcher die Stange (112) von dem Organ zum elastischen Vorspannen (110) elastisch zu der Einfahrposition hin vorgespannt ist.

8. Vorrichtung (20) gemäß Anspruch 7, **dadurch gekennzeichnet, dass** der Mechanismus zum Vorspannen (64) aufweist einen Übertragungshebel (130), der um eine Hebelachse (F-F') schwenkbar montiert ist, wobei der Hebel (130) aufweist einen ersten Arm (134), der an der Betätigungsstange (112) gelenkig angebracht ist, und einen zweiten Arm (136), der mit dem ersten Eingriffsorgan (60) verbunden ist.

9. Vorrichtung (20) gemäß irgendeinem der Ansprüche 7 bis 8, **dadurch gekennzeichnet, dass** das Organ zum elastischen Vorspannen (110) in der Lage ist, komprimiert zu werden in Folge des Passierens der Eingriffsorgane zwischen der Schließkonfiguration und der Öffnungskonfiguration.

10. Vorrichtung (20; 220) gemäß irgendeinem der vorhergehenden Ansprüche, **dadurch gekennzeichnet, dass** sie aufweist einen Zwischenmechanismus (68), der das erste Eingriffsorgan (60) und das zweite Eingriffsorgan (62) in Stellung bringt, wobei der Zwischenmechanismus (68) in der Lage ist, betätigt zu werden, insbesondere durch einen Bediener, zum Verlagern wenigstens des ersten Eingriffsorgans (60) in Folge des Passierens der Eingriffsorgane (60, 62) von der Öffnungsposition zu der Schließposition.

11. Vorrichtung gemäß Anspruch 10, **dadurch gekennzeichnet, dass** der Mechanismus zum in Stellung bringen (68) in der Lage ist, das zweite Eingriffsorgan (62) gemeinsam mit dem ersten Eingriffsorgan (60) zu betätigen in Folge des Passierens der Eingriffsorgane von der Öffnungsposition aus zu der Schließposition hin.

12. Vorrichtung (20; 220) gemäß irgendeinem der Ansprüche 9 bis 11, **dadurch gekennzeichnet, dass** der Mechanismus zum in Stellung bringen (68) aufweist einen Betätigungshebel (140), der um eine Betätigungsachse (M-M') drehbar montiert ist, wobei der Betätigungshebel (140) aufweist einen vorderen Arm (140), der dazu bestimmt ist, sich auf erste Eingriffsorgan (60) zu stützen, und einen hinteren Arm (150), wobei der Mechanismus zum Verlagern (68) aufweist eine Kuppelstange (144), die den hinteren Arm (150) mit dem zweiten Eingriffsorgan (62) verbindet.

13. Vorrichtung (20; 220) gemäß Anspruch 12, **dadurch gekennzeichnet, dass** der Mechanismus zum in Stellung bringen (68) aufweist eine Hilfsfeder (146) zum Rückstellen, wobei ein Ende der Hilfsfeder zum Rückstellen (146) an einem von der Kuppelstange (144) und dem Verlagerungshebel (140) befestigt ist.

14. Einrichtung zum Abwerfen (10), **dadurch gekennzeichnet, dass** sie aufweist:
- eine Vorrichtung (20; 220) gemäß irgendeinem der vorhergehenden Ansprüche,
- ein Fluggerät (16), welches von der Vorrichtung (20; 220) gehalten ist, wobei das Fluggerät (16) ein Halteorgan (30) aufweist, wobei das Halteorgan (30) in der Schließkonfiguration zwischen dem ersten Eingriffsorgan (60) und dem zweiten Eingriffsorgan (62) eingespannt ist.

15. Verfahren zum Abwerfen eines Fluggeräts (16) von einer Plattform (12) aus, des Typs aufweisend die Schritte:
- Bereitstellung einer Einrichtung zum Abwerfen (10) gemäß Anspruch 14, wobei das Halteorgan (30) des Fluggeräts (16) zwischen dem ersten Eingriffsorgan (60) und dem zweiten Eingriffsorgan (62) eingespannt gehalten ist,
- Aktivierung von Antriebsmitteln (24) des Fluggeräts (16),
- Aufbringung einer Kraft zum Verlagern des ersten Eingriffsorgans (60) durch das Halteorgan (30), aufgrund der Wirkung der Antriebskraft des Fluggeräts (16), entgegen einer Einspannkraft, die von dem Mechanismus zum Vorspannen (64) aufgebracht wird,
- Verlagerung wenigstens eines Einspannorgans (60, 62) zum Passieren lassen der Einspannorgane (60, 62) von der Schließposition zu der Öffnungsposition,
- Abwurf des Fluggeräts (16) weg von der Plattform (12) durch Verlagerung an der Führung.

## Claims

1. A releasable locking device (20; 220) for a flying vehicle (16) intended to be launched from a platform (12), of the type comprising:
- a housing (40) intended to be fastened on the platform (12), the housing (40) comprising a launch guide for the flying vehicle (16) from an initial position locked on the housing (40);
- a releasable locking assembly (42) for the flying vehicle (16) in the locked position, the locking assembly (42) comprising a first gripping member (60) and a second gripping member (62), at least one gripping member (60, 62) being movably mounted relative to the housing (40) to make the gripping members (60, 62) go between a closed configuration in which they grasp a retaining member (30) of the flying vehicle (16) and an open configuration in which they release the flying vehicle (16);
**characterized in that** the locking assembly (42) comprises a mechanism (64) for elastically stressing the gripping members (60, 62) capable of stressing the first gripping member (60) toward the second gripping member (62) in the closed configuration to grip the retaining member (30) between the first gripping member (60) and the second gripping member (62).

2. The device (20; 220) according to claim 1, **characterized in that** the first gripping member (60) is rotatably mounted around a first axis of rotation (C-C'), the first gripping member (60) and the first axis of rotation (C-C') being longitudinally or quasi-longitudinally movable relative to the housing (40) against the stress created by the stressing mechanism (64), between a locking position and a release position of the rotation of the first gripping member (60).

3. The device (20; 220) according to claim 2, **characterized in that** the first gripping member (60) can be pivoted around the first axis of rotation (C-C') from the release position.

4. The device (20; 220) according to one of claims 2 or 3, **characterized in that** the housing (40) comprises a trigger (160) for locking the gripping members (60, 62) in the closed configuration thereof, the locking trigger (160) being retractable from an active locking position in which the locking trigger (160) can prevent the gripping members (60, 62) from going to their open configuration, and a retracted position in which the gripping members (60, 62) can go into their open configuration.

5. The device (20; 220) according to any one of claims 2 to 4, **characterized in that** the housing comprises a bearing (170) that can prevent the rotational movement of the first gripping member (60) between the initial position and the release position of the rotation, a protuberance (172) secured to the first gripping member (60) being in contact with the bearing (170) as far as the release position of the rotation.

6. The device (20; 220) according to any one of the preceding claims, **characterized in that** the housing (40) comprises a guide member (174) for guiding the movement of the first gripping member (60), the first gripping member (60) defining a groove (176) slidingly receiving the guide member (174), the groove (176) advantageously comprising a first substantially straight region (178) and a second region (180) that is curved relative to the first region (178).

7. The device (20; 220) according to any one of the preceding claims, **characterized in that** the stressing mechanism (64) includes an actuating rod (112) intended to actuate the first gripping member (60) and an elastic stressing member (110) of the actuating rod (112), the actuating rod (112) being able to move between an idle position, in which the gripping members (60, 62) are in their closed configuration, and a deployed position, in which the gripping members (60, 62) are in their open configuration and in which the rod (112) is elastically stressed by the elastic stressing member (110) toward the idle position.

8. The device (20) according to claim 7, **characterized in that** the stressing mechanism (64) includes a transmission lever (130) pivotably mounted around a lever axis (F-F'), the lever (130) including a first arm (134) hinged on the actuating rod (112) and a second arm (136) connected to the first gripping member (60).

9. The device (20) according to any one of claims 7 to 8, **characterized in that** the elastic stressing member (110) can be compressed during the transition by the gripping members (60, 62) between the closed configuration and the open configuration.

10. The device (20; 220) according to any one of the preceding claims, **characterized in that** it includes an intermediate mechanism (68) for placing the first gripping member (60) and the second gripping member (62), the intermediate mechanism (68) being able to be actuated, in particular by an operator, to move at least the first gripping member (60) during the transition of the gripping members (60, 62) from the open configuration to the closed configuration.

11. The device according to claim 10, **characterized in that** the placement mechanism (68) can actuate the second gripping member (62) jointly with the first gripping member (60) during the transition of the gripping members (60, 62) from the open configuration to the closed configuration.

12. The device (20; 220) according to any one of claims 9 to 11, **characterized in that** the placement mechanism (68) includes an actuating lever (140) rotatably mounted around an actuating axis (M-M'), the actuating lever (140) comprising a front arm (140) intended to be pressed on the first gripping member (60) and a back arm (150), the movement mechanism (68) including a connecting rod (144) connecting the back arm (150) to the second gripping member (62).

13. The device (20; 220) according to claim 12, **characterized in that** the placement mechanism (68) includes an auxiliary return spring (146), one end of the auxiliary return spring (146) being secured on one of the connecting rod (144) and the movement lever (140).

14. A launch assembly (10), **characterized in that** it comprises:
- a device (20; 220) according to any one of the preceding claims;
- a flying vehicle (16) supported by the device (20; 220), the flying vehicle (16) including a retaining member (30), the retaining member (30) being gripped between the first gripping member (60) and the second gripping member (62) in the closed configuration.

15. A method for launching a flying vehicle (16) from a platform (12), comprising the following steps:
- providing a launch assembly (10) according to claim 14, the retaining member (30) of the flying vehicle (16) being gripped between the first gripping member (60) and the second gripping member (62);
- activating propulsion means (24) of the flying vehicle (16);
- applying a force moving the first gripping member (60) by the retaining member (30) under the propulsive force of the flying vehicle (16), against a gripping force created by the stressing mechanism (64);
- moving at least one gripping member (60, 62) to move the gripping members (60, 62) from the closed configuration to the open configuration;
- launching the flying vehicle (16) away from the platform (12) by movement on the guide.
